# EUROPÄISCHE PATENTSCHRIFT

(11) **EP 1 367 034 B1**
(45) Veröffentlichungstag und Bekanntmachung des Hinweises auf die Patenterteilung: **14.11.2007**
(21) Anmeldenummer: 03011706.3
(22) Anmeldetag: 23.05.2003
(51) Int. Cl.: C04B 35/117, C04B 35/18, C04B 35/64

(54) **Präzisionsverfahren zur Herstellung keramischer Verbundkörper**
Precise method for the production of ceramic composites
Procédé précise pour la production des composites céramiques

(30) Priorität: 01.06.2002 DE 10224377
(43) Veröffentlichungstag der Anmeldung: 03.12.2003
(73) Patentinhaber: Rauschert GmbH, 54578 Oberbettingen (DE)
(72) Erfinder: te Baay, Theo, 54567 Gerolstein (DE); Sindelar, Ralf, D-79238 Norsingen-Ehrenkirchen (DE); Greil, Peter, 91085 Weisendorf (DE)
(74) Vertreter: Maucher, Wolfgang

(56) Entgegenhaltungen:
- EP-A- 0 902 440
- DE-A1- 3 926 077
- DE-A1- 19 937 322
- US-A- 5 635 250
- US-A- 6 159 264

## Beschreibung

### Zusammenfassung der Erfindung

Die Erfindung betrifft ein Verfahren zur Herstellung eines polymerkeramischen Verbundwerkstoffkörpers unter Verwendung eines Gemischs von einem oder mehreren Polymermaterialien und einem oder mehreren Füllstoffen, dadurch gekennzeichnet, dass durch Zusetzen einer oder mehrerer reaktionsfähiger Komponenten, die mit strukturbildenden Komponenten der eingesetzten Polymermaterialien und/oder anwesenden reaktionsfähigen Gasen reagieren können, weitgehende Dimensionskonstanz bei unterschiedlichen Pyrolysedauern erzielt wird (Plateauphase) zu einem Zeitpunkt, bei dem ohne Zusatz noch keine Dimensionskonstanz erreicht wird, wie im Hauptanspruch und nachfolgend definiert.

### Hintergrund der Erfindung

Es ist aus der Patentschrift DE 199 37 322 bekannt, polymerkeramische Verbundwerkstoffkörper mit einem thermischen Ausdehnungskoeffizienten ähnlich dem eines Metalls und einer Nullschwindung gegenüber der Urform unter Bedingungen einer partiellen Pyrolyse und quantitativer und qualitativer Definition von Füllstoffen und Polymermaterialien zu erhalten. In der genannten Schrift werden als Bestandteile für die Grundmischung lediglich Polymermaterialien und keramische Füllstoffe genannt. Nachteilig an dem in der genannten Schrift beschriebenen Verfahren ist, dass es nur mit großen Einschränkungen bei der großtechnischen Herstellung insbesondere auch größerer polymerkeramischer Teile verwendbar ist.

Hauptgrund hierfür ist zunächst die fehlende Prozessstabilität. Diese bedingt insbesondere fehlende Eignung bei der Herstellung großer, für die industrielle Anwendung interessanter Chargen. Grund hierfür ist zum einen, dass bei Verwendung größerer, für die Serienproduktion geeigneter Öfen darin die erforderliche exakte und gleichmäßige Einstellung der erforderlichen Temperaturen an allen Stellen des jeweiligen Ofens nur mit erheblichem technischem Aufwand möglich und so mit hohen Kosten verbunden ist. Zum anderen ist eine Nullschwindung bei Formteilen unterschiedlichen Durchmessers oder unterschiedliche Wandstärken nur schwer zu erzielen, denn auch die Dauer der Pyrolyse für die Schwindung ist nicht zu vernachlässigen. Bei größeren Formteilen kommt es so aufgrund von Temperaturgradienten von aussen nach innen zu Problemen bei der Einstellung von geeigneten Bedingungen für die Nullschwindung.

Für vollständige Pyrolyse ist aus der DE 39 26 077 bekannt, metallische Füllstoffe zu Mischungen aus silicium-organischen Polymeren und Hartstoffteilchen und/oder anderen Verstärkungskomponenten zuzusetzen. Die erhaltenen Mischungen werden unter sehr hohen, zu vollständiger Pyrolyse führenden Temperaturen umgesetzt (in den Beispielen finden sich stets Temperaturen von 1000 °C oder mehr), um so eine geringe Porosität und Verwendbarkeit bei hoher mechanischer und thermischer Beanspruchbarkeit der erhältlichen keramischen Formkörper zu erreichen. Eine vorausdefinierte, zu erreichende Schwindung, Nullschwindung, Ausdehnung und ein gezielt eingestellter thermischer Ausdehnungskoeffizient finden sich in der Patentschrift nicht. Bei den erhöhten Temperaturen findet eine weitest gehende Umsetzung der Polymerbestandteile statt, so dass dort zu Recht nicht mehr von "polymerkeramischen", sondern von "keramischen" Verbundkörpern die Rede ist. Wegen der hohen Temperaturen ist hohe Energiezufuhr nötig. Insbesondere für die Integration von Einlegeteilen aus Stahl oder anderen Metallen in derartige Verbundwerkstoffkörper direkt bei der Pyrolyse wäre es auch vorteilhaft, möglichst niedrige Temperaturen verwenden zu können, um bei höheren Temperaturen innerhalb der Metalle auftretende Phasenübergänge (beispielsweise bei Stählen) und damit verbundene Gefüge- und Dimensionsänderungen, die beispielsweise zu Spannungen und Verformungen führen können, zu vermeiden.

Aufgabe der vorliegenden Erfindung ist, ein Verfahren zur Verfügung zu stellen, welches die genannten Nachteile vermeidet und die einfache und reproduzierbare Herstellung von Polymerkeramikbauteilen auch größerer Dimensionen und/oder in der Serienproduktion und Massenfertigung ermöglicht, insbesondere unter Einstellung einer gezielten Schwindung und eines gezielten thermischen Ausdehnungskoeffizienten.

### Allgemeine Beschreibung der Erfindung

Die Lösung der Aufgabe der Erfindung wird überraschend und in verblüffend einfacher Weise durch ein Verfahren gemäß dem Hauptanspruch und insbesondere den abhängigen Ansprüchen und wie nachfolgend beschrieben erreicht.

Überraschend wurde gefunden, dass durch die Gegenwart reaktionsfähiger Komponenten chemische Reaktionen mit den strukturbildenden Bestandteilen der Polymerkomponente hervorgerufen werden, die schon bei niedrigen Temperaturen unter 800, ja bereits unter 700 °C eine rasche Polymer-zu-Keramik-Umwandlung ermöglichen. Dadurch kann ein Prozessverlauf erzielt werden, der relativ rasch zu einem stabilen Zustand führt, bei dem während längerer Zeiträume allenfalls noch marginale Änderungen der Dimensionen des erhitzten Verbundwerkstoffkörpers auftreten (Ausbildung einer Plateauphase).

Damit gelingt es, die aus dem oben genannten Stand der Technik bekannten Nachteile zu vermeiden: Zum einen ist es nicht mehr notwendig, peinlich genau an allen Stellen des Pyrolyseofens zu genau der gleichen Zeit beziehungsweise für genau die gleiche Zeitdauer genau die gleichen Temperaturbedingungen zu erzielen. Zum anderen sind hohe Temperaturen, wie sie in DE 39 26 077 für eine vollständige Pyrolyse benötigt werden, nicht mehr erforderlich. Eine stabile Prozessführung, auch im großtechnischen Maßstab, wird möglich.

Durch die reaktionsfähigen Zusätze wird ferner erreicht, dass die erhaltenen Formkörper bereits nach kurzer Pyrolysedauer praktisch homogen durchreagiert sind und somit Gradienten in der Zusammensetzung von außen nach innen durch Temperaturgradienten innerhalb des Verbundwerkstoffkörpers drastisch vermindert oder beseitigt werden sowie innerhalb des jeweiligen Verbundwerkstoffkörpers Dimensionshomogenität des Materials gewährleistet ist.

Auch bei Formteilen mit unterschiedlichen Wandstärken und Durchmessern ("Materialdicke") lassen sich eine gleichmäßige Formgenauigkeit und damit ein gezieltes Einstellen der Schwindung bzw. Ausdehnung oder Nullschwindung erzielen.

Die Pyrolyse (zweite oder weitere Temperaturbehandlung) kann in einem Temperaturbereich geführt werden, bei dem keine Gefügeumwandlungen von Einlegeteilen, beispielsweise aus Stahl, auftreten.

Somit wird es möglich, einen wirtschaftlichen, prozessstabilen Verfahrensablauf zu erreichen. Die Pyrolysetemperatur und -dauer können heruntergesetzt werden, was zu weniger Energieaufwand führt. Die Erfindung basiert somit insbesondere auf der Verwendung von reaktionsfähigen Komponenten zur Erzielung von Dimensionskonstanz trotz unterschiedlicher Reaktionsdauern, d.h. einer hohen Prozessstabilität.

Es wird möglich, mittels gezielter Definition der Materialcharakteristik von Schwindung bzw. Ausdehnung und thermischem Ausdehnungskoeffizienten durch genaue Spezifikation der qualitativen und quantitativen Stoffgrößen der reaktiven und der passiven Komponenten und der Zusammensetzung des Pyrolysegases eine definierte lineare Dimensionsänderung gegenüber der Urform und vorzugsweise zugleich einen definierten thermischen Ausdehnungskoeffizienten einzustellen. Besonders vorteilhaft ist somit, dass das Verfahren, insbesondere aufgrund der einfach zu erzielenden Prozessstabilität, auch zur Herstellung von polymerkeramischen Formkörpern mit definierten thermischen Ausdehnungskoeffizienten und mit definierter Dimensionsänderung gegenüber einer Urform geeignet ist, wie unten näher beschrieben wird.

### Verzeichnis der Abbildungen:

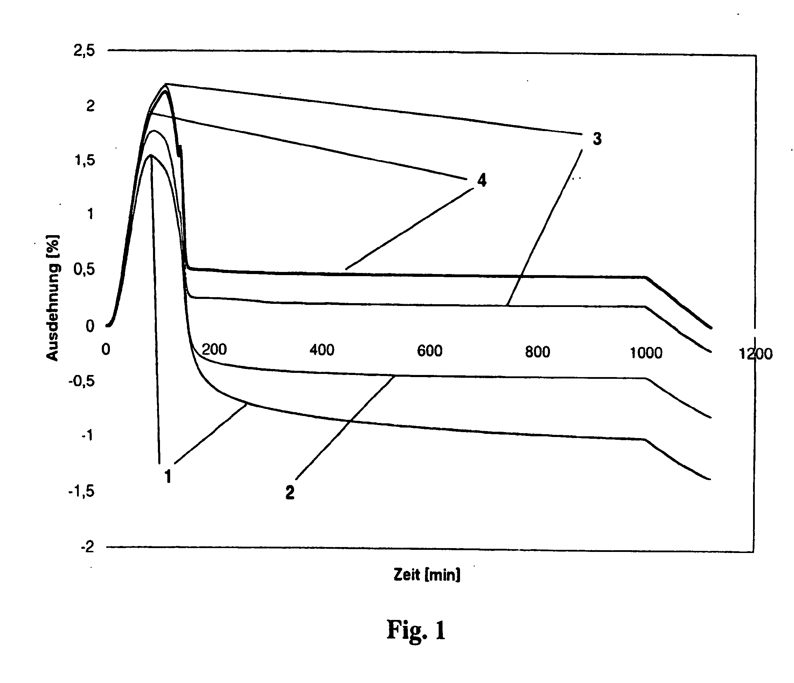

**Fig. 1** zeigt exemplarisch vier Kurven **1 - 4** für die Zeitabhängigkeit der Dimensionsänderung bei unterschiedlicher Dauer der Einwirkung einer Pyrolysetemperatur 700 °C auf Polymer/Füller/Reaktivkomponentenmischungen (zu den Details siehe Beispiel 2). Kurve **1** (mit dem geringsten Gehalt an reaktiver Komponente) entspricht qualitativ einer Kurve ohne Zusatz reaktiver Komponente (Referenzbeispiel).

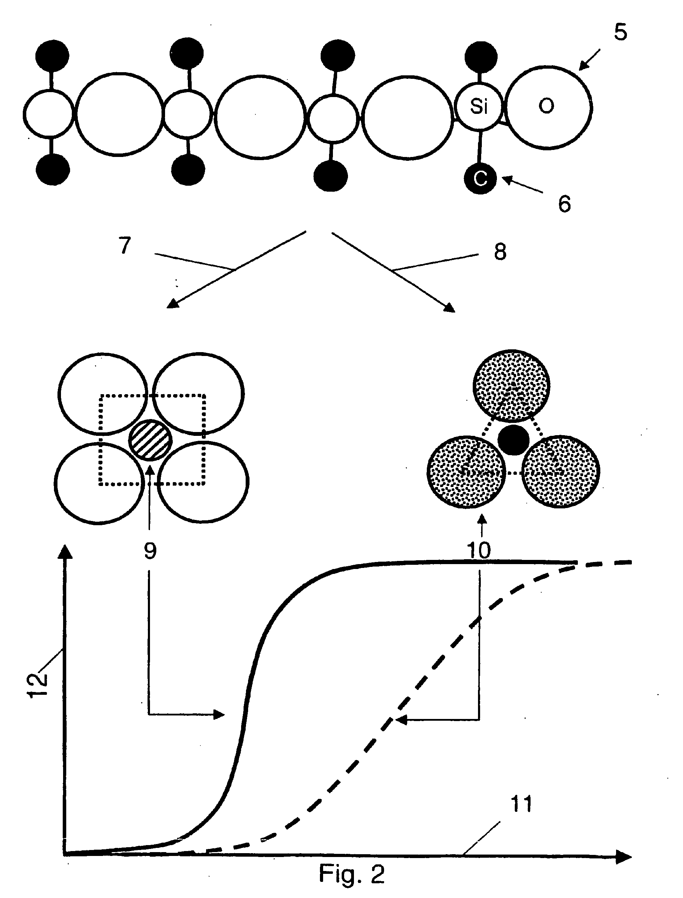

**Fig. 2** zeigt schematisch wesentliche Reaktionen während der Pyrolyse, insbesondere die Gegenüberstellung der weniger bevorzugten Metallcarbidbildung und der stark bevorzugten Metalloxidbildung. (5) Strukturbestimmende Sauerstoffbrücken in der Polymerkomponente; (6) funktionelle Gruppe (C-haltig); (7) Metalloxidbildung; (8) Metallcarbidbildung; (9) Metall: z.B. Al, Mg, Ca; (10) Metall: z.B. B, Ti, Nb, Ta; (11) Reaktionstemperatur, (12) Reaktionsgrad.

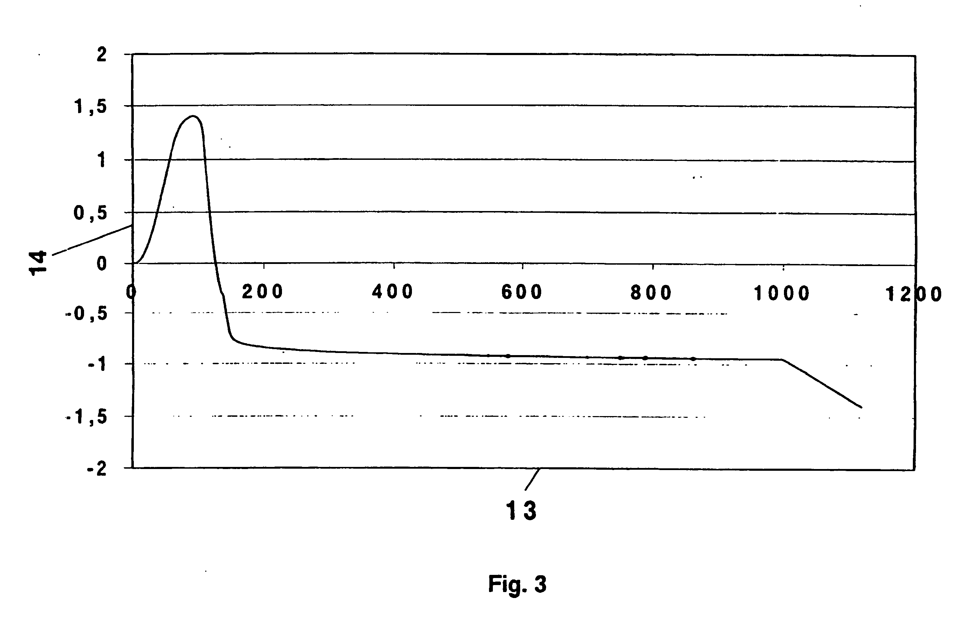

Fig. 3 zeigt exemplarisch die Zeitabhängigkeit der Dimensionsänderung einer Mischung aus 30 Vol. % präkeramischem Polymer, 35 Vol. % Aluminiumoxid und 35 Vol. % Aluminium bei Pyrolyse an Luft bei einer Temperatur von 700 °C. (13) Zeit [min], (14) Ausdehnung [%].

### Detaillierte Beschreibung der Erfindung

Die Erfindung betrifft ein Verfahren zur Herstellung eines polymerkeramischen Verbundwerkstoffkörpers, wobei ein Gemisch von einem oder mehreren Polymermaterialien (i), einem oder mehreren Füllstoffen (ii) und einer weiteren reaktionsfähigen Komponente (iii) in Form eines oder mehrerer sauerstoffaffiner Metalle - in Anwesenheit oder Abwesenheit weiterer Zusätze mit einem Anteil von 10 Vol.-% oder weniger - einer ersten Temperaturbehandlung zur Herstellung eines Grünkörpers und anschliessend einer weiteren Temperaturbehandlung bei Temperaturen unter 800 °C unterzogen wird, wobei die reaktionsfähige Komponente (ii) mit in den übrigen Komponenten der jeweiligen Ausgangsmischung vorhandenem Sauerstoff und/oder gasförmigem Sauerstoff reagiert und dadurch bei unterschiedlichen Pyrolysedauern und Materialdicken bereits nach wenigen Stunden Dimensionskonstanz, unter Ausbildung einer Plateauphase, innerhalb einer Toleranz von weniger als 0,1 %, bezogen auf eine lineare Dimension, pro Stunde Pyrolysedauer erreicht wird und auch nach einer Zeit, die dem doppelten oder mehrfachen der zum Eintritt dieser Dimensionskonstanz benötigten Zeit entspricht, erzielt wird, wobei die Komponente (iii)in einer Menge von 6 bis 60 Vol.-% zugesetzt ist, und wobei die Art und das Verhältnis der Komponenten (i), (ii) und (iii) und die Art der zweiten Temperaturbehandlung so gewählt werden, dass eine definierte lineare Dimensionsänderung in Form einer Ausdehnung, Nullschwindung oder einer Schwindung gegenüber der Urform eingestellt wird, deren Abweichung gegenüber der vorausdefinierten linearen Dimensionsänderung reproduzierbar bei 0,5 % oder weniger liegt.

Die vor- und nachstehend verwandten allgemeinen Begriffe haben vorzugsweise die nachfolgend genannten Bedeutungen, soweit nichts anderes erwähnt ist, wobei spezifischere Definitionen anstelle einzelner oder mehrerer allgemeinerer Begriffe eingesetzt werden können, was bevorzugte Ausführungsformen der Erfindung ergibt:

Unter einem polymerkeramischen Verbundwerkstoffkörper ist ein keramisches Material oder insbesondere ein keramisches Formteil zu verstehen; letzteres kann zusätzlich im Verbund Materialien aus einem oder mehreren weiteren Werkstoffen, wie metallische Werkstoffe, z.B. Stahl oder Grauguss, beispielsweise als Einlegeteile, beinhalten. Polymerkeramisch bedeutet dabei, dass bei der Herstellung von einer ein oder mehrere Polymermaterialien beinhaltenden präkeramischen Gemisch ausgegangen wird, nicht zwingend, dass nach der Pyrolyse noch Polymeranteile vorliegen.

Unter Polymermaterialien (Komponente (i)) sind insbesondere siliciumhaltige Polymere zu verstehen, beispielsweise solche, die als strukturbildende Komponenten (d.h. als Komponenten, die solche der Formel [(R)(R')SiX]ₙ oder [(R)SiX_{1,5}]ₙ, worin R, R' unsubstituierte oder substituierte Reste ausgewählt aus Alkyl, Aryl, Heterocyclyl, Cycloalkyl und dergleichen darstellen können und X für SiR₂ (Polysilane), CH₂ (Polycarbosilane), NH (Polysilazane) oder O (Polysiloxane) stehen kann, oder komplexere Copolymere, oder Mischungen der genannten Polymermaterialien, beinhalten. Bevorzugt sind O-haltige siliciumhaltige Polymere, wie Polysiloxane, oder diese (vorzugsweise in einem Anteil von mehr als 30, insbesondere mehr als 60 %) enthaltende siliciumhaltige Polymere. Polysiloxanharze sind besonders bevorzugt. Die Polymermaterialien werden vorzugsweise als Pasten, Pulver oder Granulate verwendet. Der Polymeranteil liegt, bezogen auf die präkeramische Ausgangsmischung, vorzugsweise im Bereich von 10 bis 60 Vol-%, insbesondere von 20 bis 50 Vol-%.

"Strukturbildende Komponenten" der eingesetzten Polymeraterialien sind diejenigen Bestandteile (Atome und Molekülteile), welche bei der Pyrolysebehandlung (weitere Temperaturbehandlung) die durch die thermische Zersetzung aus dem Polymermaterial sich bildende polymerkeramische bzw. keramische Phase bilden, die beispielsweise im Falle von Polysiloxan als Polymer aus einem glasartigen (amorphen) Netzwerk von Si-O-Si besteht, in dem noch Reste organischer Gruppen (d.h. H-enthaltende Gruppen, wie Si-H, Si-CH₂ und dergleichen) enthalten sein können.

Füllstoffe (Komponente (ii)) sind unter den Pyrolysebedingungen weitestgehend inerte Füllstoffe. Hierzu zählen insbesondere Oxide von Metallen, wie Al₂O₃, MgO, ZrO₂ (vollstabilisiert kubisch oder teilweise stabilisiert kubisch-tetragonal), Fe₂TiO₅, MgFe₂O₄, CeO₂, CaTiO₃, SiO₂ (insbesondere als Quarz), TiO₂, Silikate, wie Natrium-, Magnesium-, Calcium-, Barium-, Eisen-, Natriumaluminium-, Kaliumaluminium- oder Lithiumaluminiumsilikat, Nitride oder Carbide von Metallen, insbesondere von Si, Ti, Zr, Hf, V, Nb, Ta, Cr, Mo und/oder W, wie SiC, Si₃N₄ oder Cr₃C_{2,} ferner auch Fluoride, wie Kalziumfluorid. Die Füllstoffe werden in erster Linie in Pulverform eingesetzt. Die Korngröße liegt vorzugsweise im Bereich von unter 50 µm, vor allem zwischen 0.5 und 20 µm. Der Anteil an inertem Füllstoff liegt, bezogen auf die präkeramische Ausgangsmischung, vorzugsweise im Bereich von 10 bis 60 Vol-%, insbesondere von 20 bis 50 Vol-%.

Als reaktionsfähige Komponenten, die mit strukturbildenden Komponenten der eingesetzten Polymermaterialien und/oder anwesenden reaktionsfähigen Gasen reagieren (können) (Komponente (iii)), finden sauerstoffaffine Metalle, d.h., mit in den übrigen Komponenten der jeweiligen Ausgangsmischung (insbesondere dem Polymerteil) vorhandenem Sauerstoff und/oder, falls anwesend, anwesenden reaktionsfähigen Gasen, insbesondere gasförmigem Sauerstoff (auch in Gasgemischen, wie Luft, was besonders bevorzugte einfache Arbeitsbedingungen ermöglicht, da keine Isolierungsmaßnahmen gegen Gasaustausch erforderlich sind), unter den Pyrolysebedingungen reaktionsfähige Metalle, insbesondere Ca, Sr, Zn, Sc, Y, Sn, Zr oder vor allem Mg und/oder Al, die zu verminderter oder praktisch keiner Bildung von Carbiden mit vorhandenem Kohlenstoff bei gleichzeitig vermehrter Bildung von Verbindungen mit vorhandenen Heteroatomen, insbesondere Sauerstoff, führen, was besonders bevorzugte Produkte ermöglicht. Daher ist ein Verfahren in Gegenwart von Sauerstoff (vorzugsweise sowohl als Gas als auch in der Polymerkomponente (i)) ganz besonders bevorzugt, wie auch die resultierenden polymerkeramischen Verbundwerkstoffkörper (da diese weitgehend carbidfrei sind) - vgl. Fig. 2 zur Veranschaulichung). Es können einzelne oder auch Gemische von zwei oder mehr dieser reaktionsfähigen Komponenten vorliegen. Die reaktionsfähigen Komponenten werden vorzugsweise als Pulver verwendet. Die Korngröße liegt insbesondere im Bereich von unter 100 µm, insbesondere vor allem zwischen 5 und 50 µm. Die zur Einstellung der Dimensionskonstanz benötigte Mindestmenge an reaktionsfähiger Komponente kann beispielsweise abgeschätzt werden, indem man die Molmengen an reaktiven Gruppen und Atomen der Polymerkomponente ermittelt und die stöchiometrische Menge an reaktiver Komponente zur vollständigen Umsetzung berechnet. Die entsprechende Molmenge ergibt dann die erforderliche Minimalmenge der reaktionsfähigen Komponente an. Die Menge der reaktionsfähigen Komponenten liegt, bezogen auf die präkeramische Ausgangsmischung, im Bereich von 6 bis 60 Vol-%, insbesondere von 10 bis 50 Vol-%. Die genannten reaktionsfähigen Komponenten haben zum Teil möglicherweise eine Art autokatalystischen Effekt, indem sie bereits bei relativ niedriger Temperatur (z.T. unter dem Schmelzpunkt der zugesetzten Komponente (iii), z.B. im Falle der Verwendung von Mg) die bei der Pyrolyse stattfindenden Reaktionen ermöglichen, während sie gleichzeitig selbst an den chemischen Reaktionen während der Pyrolyse teilnehmen. Die Reaktion kann bereits unterhalb des Schmelzpunkts der reaktionsfähigen Komponente einsetzen, die Spaltung und Strukturumwandlung des Polymermaterials finden bereits bei wesentlich niedrigeren Temperaturen als bei der füllergesteuerten Hochtemperaturpyrolyse statt.

Als reaktionsfähige Gase sind Sauerstoff oder Gemische von Sauerstoff mit unter den Pyrolysebedingungen ("weitere Temperaturbehandlung") nicht reagierenden (inerten) Gasen, wie Edelgasen, Stickstoff oder Kohlendioxid, oder Luft, bevorzugt.

Neben den Polymermaterialien, Füllstoffen und reaktionsfähigen Komponenten können noch weitere Zusätze vorliegen, vorzugsweise im Bereich von ≤ 10 Volumenprozent, insbesondere von 5 oder weniger Vol.-%, die beispielsweise geeignet sein können, die Festigkeit oder Formbarkeit zu steigern, wie wachsartige Substanzen, z.B. Wachs, oder Katalysatoren, wie Aluminiumacetylacetonat oder ferner Glasfritten.

Die Art der Komponenten (i), (ii) und (iii), und gegebenenfalls weiterer Komponenten, wird durch ihre oben definierte Zusammensetzung und Beschaffenheit (z.B. Partikelgröße und dergleichen) definiert.

Die Temperaturen für die Pyrolyse (zweite = weitere Temperaturbehandlung = unter Umständen nur zur teilweisen Pyrolyse führende Temperatur; insbesondere in Gegenwart von Sauerstoff (vor allem aus Luft) und im wesentlichen ohne Carbidbildung) liegen vorzugsweise unter 800 °C, vorzugsweise zwischen 400 bis 790 °C, insbesondere im Bereich von 400 bis 700 °C. Für die Ausbildung der Plateauphase (vgl. z.B. (2) in Fig. 1) ist die Temperatur (Mindestpyrolysetemperatur) im wesentlichen durch die Zusammensetzung bestimmt; sie liegt vorzugsweise im Bereich des Schmelzpunktes der reaktionsfähigen Komponente (iii) oder etwas, z.B. bis zu 25 °C, darüber, oder (insbesondere im Falle von Mg als Komponente (iii)) niedriger, beispielsweise bis zu 100 °C unterhalb dieses Schmelzpunktes. Es ist möglich, die Pyrolysetemperatur gegenüber der Mindestpyrolysetemperatur höher anzusetzen oder eine weitere Temperaturbehandlung bei weiter gegenüber der Mindestpyrolysetemperatur erhöhten Temperaturen durchzuführen, (vorzugsweise immer noch innerhalb der oben als bevorzugt angegebenen Temperaturbereiche), um so eine weitere Einstellung der vorausdefinierten Schwindung bzw. Ausdehnung oder Nullschwindung zu ermöglichen. Vorzugsweise (insbesondere bei sauerstoffhaltigen Polymermaterialien (i) und/oder in Gegenwart von (insbesondere gasförmigem) Sauerstoff, wie in Luft) wird jedoch eine Temperatur im Bereich des Plateaus ausgewählt und es folgt keine weitere Nachbehandlung bei weiter erhöhter Temperatur.

Die Art der Temperaturbehandlung betrifft insbesondere die jeweils verwendeten Änderungsraten für die Temperatur bei der Erwärmung, die maximale Temperatur und ferner die Art der Abkühlung.

Dimensionskonstanz bei unterschiedlichen Pyrolysedauern zu einem Zeitpunkt, bei dem ohne Zusatz der reaktionsfähigen Komponente (noch) keine Dimensionskonstanz erzielt wird, bedeutet in erster Linie, dass die Reaktionen bei der Pyrolyse so rasch ablaufen, dass bereits nach wenigen Stunden (insbesondere nach 2 bis 8 h) Dimensionskonstanz innerhalb einer Toleranz von weniger als 0,1 % (bezogen auf eine lineare Dimension), insbesondere von weniger als 0,05 %, pro Stunde Pyrolysedauer erreicht wird und sich auch nach einer Zeit, die dem doppelten oder sogar mehrfachen der zum Zeitpunkt des Eintritts dieser Dimensionskonstanz benötigten Zeit entspricht, findet (es tritt ein Plateau auf, vergleiche die waagrechten Linien in Fig. 1).

Besonders bevorzugt ist eine Ausführungsform der Erfindung, bei der (a) eine gezielte (vorherdefinierte = gewünschte) Dimensionsänderung (Ausdehnung, Schwindung oder keine Änderung) innerhalb einer Toleranz von 0,5 % oder weniger, insbesondere von 0,1 % oder weniger, vorzugsweise 0,05 % oder weniger, erzielt wird, vorzugsweise (b) eine vorher definierte lineare Dimensionsänderung im Bereich von + 5 % (Ausdehnung) bis zu - 5 % (Schwindung), insbesondere + 3% (Ausdehnung) bis zu - 3 % (Schwindung) gegenüber der Urform; wobei in beiden Fällen (a) und (b) vorzugsweise zusätzlich ein definierter thermischer Ausdehnungskoeffizient, insbesondere analog dem eines Metalls, vor allem von Grauguss oder Stahl, d.h. in erster Linie im Bereich von 8 bis 15, vorzugsweise 9 bis 13 x 10⁻⁶ K⁻¹, eingestellt wird. Eine besonders bevorzugte Variante bezieht sich hier auf eine Nullschwindung (= im wesentlichen, d.h. insbesondere innerhalb der nachfolgend genannten Grenzen) keine Änderung gegenüber den, d.h. weniger als 0,1, vorzugsweise weniger als 0,5 % Dimensionsänderung gegenüber der Urform.

Unter "Urform" ist hierbei die durch das Urformwerkzeug vorgegebene Form zu verstehen.

Die Ermittlung der für das Erreichen einer gezielten (linearen), vorausdefinierten Dimensionsänderung, insbesondere in Kombination mit einem definierten thermischen Ausdehnungskoeffizienten (TAK), kann auf empirischem oder theoretischem Weg oder durch Kombination empirischer und theoretischer Methoden vorgenommen werden.

Empirisch kann beispielsweise die Dimensionsänderung eines Verbundwerkstoffkörpers, der auf einem oder mehreren Polymermaterialien und einem oder mehreren inerten Füllern basiert, ermittelt werden und dann die Menge einer oder mehrerer reaktionsfähiger Komponenten, in deren Gegenwart eine bestimmte Dimensionsänderung (insbesondere Nullschwindung) und vorzugsweise zugleich ein definierter TAK erreicht wird, bestimmt werden, indem man diese Menge variiert und die übrigen Parameter [insbesondere Art der Vorbehandlung, Pyrolysetemperatur, Art und Beschaffenheit (z.B. Korngröße und ggf. Beschichtung) der verwendeten Komponenten, Art und Beschaffenheit weiterer Zusätze, An- oder Abwesenheit und ggf. Art von Inertgasen oder anderen Gasen, wie Sauerstoff oder Luft, etc.] konstant hält bis zum Erreichen der gewünschten Schwindung und insbesondere des entsprechenden TAK, wobei notfalls iterativ die Polymermaterial/Füller-Relation leicht variiert wird, bis die gewünschten Parameter in geeigneten Bereichen liegen.

Alternativ können direkt in einer Art dreidimensionaler Matrix analog der zweidimensionalen Matrix in DE 199 37 322 Polymermaterial(ien), Füller und reaktionsfähige Komponente bei ansonsten konstanten Bedingungen variiert werden, erforderlichenfalls auch unter iterativem Variieren von nur zwei Parametern, z.B. in Feinuntersetzung, bis die gewünschte definierte Dimensionsänderung oder insbesondere die gewünschte Kombination aus Dimensionsänderung und TAK erzielt wird.

Auch theoretisch ermittelte Daten können in die Ermittlung geeigneter Mengenverhältnisse und Pyrolysetemperaturen (die, soweit es um die Plateauphase geht, vorzugsweise wie oben beschrieben durch die Zusammensetzung definiert sind) einfließen, vgl. P. Greil, Pyrolysis of Active and Passive Filler Loaded Preceramic Polymers, in Handbook of Advanced Ceramic Materials Science, Edtr. S. Somiya, Academic Press, Burlington, MA (2002).

Vorzugsweise erfolgt die Verarbeitung der Komponenten zur Mischung und ggf. die Reaktion zum Grünkörper unter Wasserausschluss.

Vorzugsweise kann das Polymermaterial vor der Mischung mit dem inerten Füllmaterial auf die reaktionsfähige Komponente aufgebracht werden, um die Verarbeitungseigenschaften (Homogenität der Mischung) und die Lagerstabilität der reaktionsfähigen Komponente zu verbessern.

Die Formgebung und Vernetzung der Ausgangsmischung (zu einem Grünkörper) erfolgt im Rahmen der ersten Temperaturbehandlung in einem Formgebungs- und Vernetzungsschritt, beispielsweise in einer entsprechenden Form, erfolgen, beispielsweise durch Mischung und Formgebung und Vernetzung bei Temperaturen bis zu 250 °C; z.B. zwischen 150 und 250 °C, oder direkt im Rahmen der Pyrolyse in einem Schritt.

Wo nicht bereits erwähnt, bedeutet Dimensionsänderung die lineare Dimensionsänderung. Die Dimensionsänderung wird also anstelle einer Volumenänderung als lineare Dimensionsänderung angegeben, welche die Länge einer bestimmten, beliebig ausgewählten Achse des Verbundwerkstoffkörpers bedeutet, die repräsentativ für die Dimensionsänderungen angegeben wird.

Besonders bevorzugte Ausführungsformen der Erfindung werden durch die Unteransprüche die hier durch Bezugnahme aufegnommen werden, und insbesondere die nachfolgenden Beispiele definiert.

Beispiele: Die nachfolgenden Beispiele dienen der Illustration der Erfindung, ohne ihren Umfang einzuschränken. Alle Angaben von Prozentanteilen erfolgen in Volumen-Prozent (Vol-%).

### Beispiel 1: Festigkeiten verschiedener verfahrensgemäß erhältlicher Materialien:

Es werden verschiedene Mischungen aus Polymer, inertem Füller und Metallpulver untersucht. Polymer, Katalysator und Füllstoffe werden dazu in einem Messkneter (Gebrüder Haake GmbH, Karlsruhe, Deutschland, Typ PolyDrive) bei 80 °C für 12 min geknetet und die Mischung anschließend grob vermahlen (durch flüssigen Stickstoff gekühlt und in einer Scheibenschwingmühle vermahlen). Die vermahlene Pulvermischung wird anschließend in einer Stahlform bei 230 °C und 8 MPa zu Platten (100 x 50 x 3 mm) verpresst. Die Umsetzung geschieht jeweils an Luft, das Pyrolyseschema hat folgende Charakteristik: 5 K/Min Aufheizen, dann 4 h bei 700 °C halten und mit 5 K/min abkühlen. Dabei werden folgende Festigkeiten erzielt:

| Polymer [Vol-%] | Aluminiumoxid [Vol-%] | Aluminium [Vol-%] | Magnesium [Vol-%] | Festigkeit; Durchschnittswert [MPa] (Anzahl der Proben) |
|---|---|---|---|---|
| 30 | 35 | 35 | - | 125 (6) |
| 40 | 15 | 45 | - | 127 (6) |
| 30 | 35 | 30 | 5 | 130 (6) |

### Details zu den Materialien:

Al-ac-ac = Aluminiumacetylacetonat (Katalysator)
Polymer: Poly(methylsilsesquioxan), (CH₃SiO_{1,5})ₙ, Hersteller: Fa. Wacker Chemie, Burghausen, Typ: Festharz MK in Pulverform, Korngröße ca. 20 µm nach Datenblatt, ca 8 µm gemessen.
Aluminiumoxid: Korngröße 0.8 bis 1,2 µm, Fa. Alcoa, Typ CT 530 SG, mittlere gemessene Korngröße 1,7 µm.
Aluminium: mittlere Korngröße 16 µm Johnson Matthey GmbH, Karlsruhe, mittlere gemessene Korngröße 17µm.
Magnesium: mittlere Korngröße 50 µm, non ferrum GmbH & Co. KG, St. Georgen, Österreich, mittlere gemessene Korngröße: 48 µm.

### Beispiel 2: Einstellung rascher Dimensionsstabilität bei Zugabe von Aluminium:

Die Zugabe von Aluminium führt zu schneller Dimensionstabilität. Fig. 1 zeigt eine Dilatometeruntersuchung an einer präkeramischen Masse, die nur mit einem inerten Füller beladen ist (vergleichbar den Massen aus DE 199 37 322), und dreier präkeramischer Massen, denen neben inertem Füller (in beiden Fällen Aluminiumoxid) Aluminiumpulver als aktive Komponente zugesetzt wird. Die Umsetzung findet in allen Versuchen unter Stickstoff statt. Während die Masse ohne Aluminium noch nach mehr als 16 Stunden Pyrolyse schwindet, erreicht die Masse mit Aluminiumzusatz bereits nach ca. 3 h ihre endgültige Form. Nach dem Abkühlen hat der resultierende keramische Verbundwerkstoffkörper nach Kurve 4 die gleichen Dimensionen wie der Grünkörper vor dem Start der Pyrolyse (es wird praktisch Nullschwindung erreicht). Die anderen Kurven zeigen, dass auch andere Schwindungen gezielt eingestellt werden können.

| Kurve (Bezugszeichen in Fig. 1) | Polymer (Vol-%) | Aluminiumoxid (Vol-%) | Aluminium (Vol-%) |
|---|---|---|---|
| 4 | 30 | 35 | 35 |
| 3 | 40 | 30 | 30 |
| 2 | 40 | 50 | 10 |
| 1 | 40 | 55 | 5 |

Kurve 1 in Fig. 1 entspricht dabei weitgehend einer Kurve ohne Zusatz reaktionsfähiger Komponente (auch nach mehr als 16 Stunden Pyrolyse noch keine Dimensionskonstanz) Referenzbeispiel). Eine mögliche Erklärung ist, dass hier ist die Menge an Aluminium noch zu gering ist, um vollständige Umsetzung der reaktionsfähigen Gruppen der Polymerkomponente zu ermöglichen.

### Beispiel 3: Umsetzung an Luft:

Die Umsetzung mit dem Metallpulver kann vorteilhaft an Luft durchgeführt werden. Dies zeigt die Schwindung einer präkeramischen Polymermasse mit 35 Vol. % Aluminium, 30 Vol. % Polymer und 35 Vol. % Aluminiumoxid (Komponenten jeweils wie in Beispiel 1) bei Umsetzung an Luft bei 700 °C, Fig. 3. Die Masse erreicht auch bei der Luftpyrolyse nach weniger als zehn Stunden Dimensionsstabilität. Durch Röntgenbeugungsuntersuchung (Pulver-Diffraktometer Siemens D500, Cu-Kα, mit Software Diffrac plus) kann gezeigt werden, dass es in Anwesenheit von Luft zu keiner Bildung von Aluminiumcarbid kommt. Dies ergibt verbesserte Eigenschaften gegenüber der Pyrolyse unter Inertgas (Stickstoff).

## Patentansprüche

1. Verfahren zur Herstellung eines polymerkeramischen Verbundwerkstoffkörpers, wobei ein Gemisch von einem oder mehreren Polymermaterialien (i), einem oder mehreren Füllstoffen (ii) und einer weiteren reaktionsfähigen Komponente (iii)in Form eines oder mehrerer sauerstoffaffiner Metalle - in Anwesenheit oder Abwesenheit weiterer Zusätze mit einem Anteil von 10 Vol.-% oder weniger - einer ersten Temperaturbehandlung zur Herstellung eines Grünkörpers und anschliessend einer weiteren Temperaturbehandlung bei Temperaturen unter 800 °C unterzogen wird,
wobei die reaktionsfähige Komponente (iii) mit in den übrigen Komponenten der jeweiligen Ausgangsmischung vorhandenem Sauerstoff und/oder gasförmigem Sauerstoff reagiert und dadurch bei unterschiedlichen Pyrolysedauern und Materialdicken bereits nach wenigen Stunden Dimensionskonstanz, unter Ausbildung einer Plateau phase, innerhalb einer Toleranz von weniger als 0,1 %, bezogen auf eine lineare Dimension, pro Stunde Pyrolysedauer erreicht wird und sich auch nach einer Zeit findet, die dem doppelten oder mehrfachen der zum Eintritt dieser Dimensionskonstanz benötigten Zeit entspricht, erzielt wird, wobei Komponente (iii)in einer Menge von 6 bis 60 Vol.-% zugesetzt ist,
und wobei die Art und das Verhältnis der Komponenten (i), (ii) und (iii) und die Art der zweiten Temperaturbehandlung so gewählt werden, dass eine definierte lineare Dimensionsänderung in Form einer Ausdehnung, Nullschwindung oder einer Schwindung gegenüber der Urform eingestellt wird, deren Abweichung gegenüber der vorausdefinierten linearen Dimensionsänderung reproduzierbar bei 0,5 % oder weniger liegt.

2. Verfahren nach Anspruch 1, wobei Sauerstoff als solcher oder als Gemische von Sauerstoff mit unter den Pyrolysebedingungen nicht reagierenden Gasen oder als Luft anwesend ist.

3. Verfahren nach Anspruch 1 oder 2, wobei sich die Dimensionskonstanz bereits nach 2 bis 8 Stunden einstellt.

4. Verfahren nach einem der Ansprüche 1 bis 3, wobei als reaktionsfähige Komponente (iii) Magnesium, Aluminium oder Gemische davon verwendet werden.

5. Verfahren nach einem der Ansprüche 1 bis 4, **dadurch gekennzeichnet, dass** die Art und das Verhältnis der Komponenten (i), (ii) und (iii) sowie die Art der Temperaturbehandlung auf empirischem und/oder theoretischem Weg so gewählt werden, dass für den keramischen Verbundwertstoffkörper gegenüber der Urform eine vorausdefinierte lineare Dimensionsänderung im Bereich von + 5 % Ausdehnung bis zu - 5 % Schwindung gegenüber der Urform erzielt wird.

6. Verfahren nach Anspruch 5, **dadurch gekennzeichnet, dass** die Art und das Verhältnis der Komponenten (i), (ii) und (iii) sowie die Art der weiteren Temperaturbehandlung so gewählt werden, dass die vorausdefinierte lineare Dimensionsänderung im Bereich von + 3 % Ausdehnung bis zu - 3 % Schwindung gegenüber der Urform liegt.

7. Verfahren nach einem der Ansprüche 1 bis 6, **dadurch gekennzeichnet, dass** die Art und insbesondere die Gewichtsverhältnisse der Komponenten (i), (ii) und (iii) und die Art der weiteren Temperaturbehandlung empirisch und/oder theoretisch so gewählt werden, dass der resultierende Verbundwerkstoffkörper einen vorausdefinierten thermischen Ausdehnungskoeffizienten sowie eine vorausdefinierte Dimensionsänderung gegenüber der Urform aufweist, wobei die Dimensionsänderung reproduzierbar innerhalb einer Toleranz von 0,1 % oder weniger bezogen auf die vorausdefinierte Dimensionsänderung liegt.

8. Verfahren nach Anspruch 7, wobei Art und insbesondere die Gewichtsverhältnisse der Komponenten und (iii) sowie die Art der weiteren Temperaturbehandlung so gewählt werden, dass der vorausdefinierte thermische Ausdehnungskoeffizient der eines Metalls, insbesondere von Grauguss, ist, und die vorher definierte Schwindung gegenüber der Urform nach der zweiten Temperaturbehandlung innerhalb einer Toleranz von 0,1 % oder weniger, eine vorausdefinierte lineare Dimensionsänderung im Bereich von +5% - Ausdehnung bis -5 % Schwindung, insbesondere + 3% Ausdehnung bis zu - 3 % Schwindung, gegenüber der Urform ist.

9. Verfahren nach einem der Ansprüche 1 bis 8; wobei als Polymermaterial (i) sauerstoffhaltige Siliciumpolymere verwendet werden.

10. Verfahren nach einem der Ansprüche 1 bis 9, **dadurch gekennzeichnet, dass** die weitere Temperaturbehandlung in Gegenwart von Sauerstoff oder Luft stattfindet.

11. Verfahren nach einem der Ansprüche 1 bis 10, **dadurch gekennzeichnet, dass** die Menge der reaktionsfähigen Komponente (iii), bezogen auf die präkeramische Ausgangsmischung, im Bereich von 6 bis 60 Vol.-%, insbesondere von 10 bis 50 Vol-%, liegt.

12. Verfahren nach einem der Ansprüche 1 bis 11, **dadurch gekennzeichnet, dass** die Pyrolysetemperatur bei der weiteren Temperaturbehandlung in einem Bereich von 400 bis 790 °C, insbesondere von 400 bis 700 °C, liegt.

## Claims

1. Process for preparing a polymer-ceramic composite body, wherein a mixture of one or more polymer materials (i), one or more fillers (ii) and a further reactive component (iii) in the form of one or more metals with an affinity for oxygen - in the presence or absence of other additives in an amount of 10% by volume or less - is subjected to a first temperature treatment to produce a green body and subsequently to a further temperature treatment at temperatures below 800°C,
whereby the reactive component (iii) reacts with oxygen present in the other components of the starting mixture and/or gaseous oxygen, and thereby, for different durations of pyrolysis and thicknesses of material, after only a few hours a constancy of dimensions is achieved, with formation of a plateau phase, within a tolerance of less than 0.1%, based on a linear dimension, per hour of pyrolysis, and is retained for a time which corresponds to twice or several times the amount of time needed for this constancy of dimensions to be obtained, component (iii) being added in an amount from 6 to 60% by volume,
and wherein the nature and the ratio of components (i), (ii) and (iii) and the nature of the second temperature treatment are selected such that a defined linear change in dimensions is obtained in the form of an expansion, zero shrinkage or shrinkage relative to the original shape which reproducibly deviates by an amount of 0.5% or less from the pre-defined linear change in dimensions.

2. Process according to claim 1, wherein oxygen is present as such, or in the form of mixtures of oxygen with gases that do not react under the pyrolysis conditions, or as air.

3. Process according to claim 1 or 2, wherein the constancy of dimensions is obtained after only 2 to 8 hours.

4. Process according to one of claims 1 to 3, wherein magnesium, aluminium or mixtures thereof are used as the reactive component (iii).

5. Process according to one of claims 1 to 4, **characterised in that** the nature and the ratio of components (i), (ii) and (iii) and the nature of the temperature treatment is selected empirically and/or theoretically such that a pre-defined linear change in dimensions in the range from +5% expansion to -5% shrinkage, relative to the original shape, is achieved for the ceramic composite body, compared with its original shape.

6. Process according to claim 5, **characterised in that** nature and the ratio of components (i), (ii) and (iii) and the nature of the further temperature treatment are selected such that the pre-defined linear change in dimensions is in the range from +3% expansion to -3% shrinkage compared with the original shape.

7. Process according to one of claims 1 to 6, **characterised in that** the nature and, in particular, the ratios by weight of components (i), (ii) and (iii)and the nature of the further temperature treatment are selected empirically and/or theoretically such that the resulting composite body has a pre-defined thermal expansion coefficient and a pre-defined change in dimensions compared with the original shape, the change in dimensions being reproducibly within a tolerance of 0.1% or less, based on the pre-defined change in dimensions.

8. Process according to claim 7, wherein the nature and particularly the ratios by weight of the components (i), (ii) and (iii) and the nature of the further temperature treatment are selected such that the pre-defined thermal expansion coefficient is that of a metal, particularly grey cast iron, and the pre-defined shrinkage compared with the original shape after the second temperature treatment is within a tolerance of 0.1% or less a pre-defined linear change in dimensions in the range from +5% expansion to -5% shrinkage, in particular +3% expansion to -3% shrinkage, compared with the original shape.

9. Process according to one of claims 1 to 8, wherein oxygen-containing silicon polymers are used as polymer material (i).

10. Process according to one of claims 1 to 9, **characterised in that** the further temperature treatment takes place in the presence of oxygen or air.

11. Process according to one of claims 1 to 10, **characterised in that** the amount of reactive component (iii), based on the pre-ceramic starting mixture, is in the range from 6 to 60% by volume, particularly 10 to 50% by volume.

12. Process according to one of claims 1 to 11, **characterised in that** the pyrolysis temperature during the further temperature treatment is in the range from 400 to 790°C, particularly from 400 to 700°C.

## Revendications

1. Procédé de fabrication d'un corps en matériau composite polymère-céramique, un mélange d'un ou de plusieurs matériaux polymères (i), d'une ou de plusieurs matières de charge (ii), et d'un autre composant réactif (iii) sous la forme d'un ou de plusieurs métaux ayant de l'affinité pour l'oxygène- en présence ou en absence d'autres additifs à une teneur de 10 % en volume ou moins- étant soumis à un premier traitement thermique pour produire un corps vert et ensuite à un traitement thermique ultérieur à des températures inférieures à 800°C,
le composant réactif (iii) réagissant avec l'oxygène et/ou l'oxygène gazeux disponible dans les composants restants du mélange de départ respectif et par ce moyen parvenant à une stabilité dimensionnelle déjà après quelques heures pour différentes durées de pyrolyse et différentes épaisseurs de matériaux, par formation d'une phase plateau, avec une tolérance de moins de 0,1 % par rapport à une dimension linéaire, par heure de durée de pyrolyse et qui s'établit également après un temps, qui correspond à deux fois ou plusieurs fois le temps nécessaire à l'obtention de la stabilité dimensionnelle, le composant (iii) étant utilisé en une quantité de 6 à 60 % en volume,
et le type et les rapports des composants (i), (ii) et (iii) et le type du second traitement thermique étant choisis de sorte à ajuster un changement dimensionnel linéaire défini, sous la forme d'une dilatation, d'un retrait nul ou d'un retrait, par rapport à la forme d'origine, dont l'écart par rapport au changement dimensionnel linéaire prédéfini est reproductible à 0,5 % ou moins.

2. Procédé selon la revendication 1, l'oxygène étant présent tel quel ou sous forme de mélange d'oxygène avec des gaz n'ayant pas réagi dans les conditions de la pyrolyse ou sous forme d'air.

3. Procédé selon la revendication 1 ou la revendication 2, la stabilité dimensionnelle étant établie déjà après 2 à 8 heures.

4. Procédé selon l'une quelconque des revendications 1 à 3, le magnésium, l'aluminium ou un mélange de ceux-ci étant utilisés comme composants réactifs (iii).

5. Procédé selon l'une quelconque des revendications 1 à 4, **caractérisé en ce que** le type et les rapports des composants (i), (ii) et (iii), ainsi que le type de traitement thermique, sont choisis de manière empirique et/ou théorique de sorte à réaliser pour le corps composite céramique un changement dimensionnel linéaire prédéfini dans la plage de +5 % d'allongement à -5 % de retrait, par rapport à la forme d'origine.

6. Procédé selon la revendication 5, **caractérisé en ce que** le type et les rapports des composants (i), (ii) et (iii), ainsi que le type du traitement thermique ultérieur, sont choisis de sorte que le changement dimensionnel linéaire prédéfini se situe dans la plage de +3 % d'allongement à -3 % de retrait, par rapport à la forme d'origine.

7. Procédé selon l'une quelconque des revendications 1 à 6, **caractérisé en ce que** le type et en particulier les rapports pondéraux des composants (i), (ii) et (iii), ainsi que le type de traitement thermique ultérieur, sont choisis de manière empirique et/ou théorique de sorte que le corps composite céramique résultant présente un coefficient de dilatation thermique prédéfini ainsi qu'un changement dimensionnel prédéfini par rapport à la forme d'origine, le changement dimensionnel se situant de manière reproductible dans une tolérance de 0,1 % ou moins, relativement au changement dimensionnel prédéfini.

8. Procédé selon la revendication 7, le type et en particulier les rapports pondéraux des composants (i), (ii) et (iii), ainsi que le type de traitement thermique ultérieur, étant choisis de sorte que le coefficient de dilatation thermique prédéfini est celui d'un métal, en particulier de la fonte grise, et le retrait défini précédemment par rapport à la forme d'origine, après le second traitement thermique, se situe dans une tolérance de 0,1 % ou moins d'un changement dimensionnel linéaire prédéfini dans la plage de +5 % d'allongement à -5 % de retrait, en particulier de +3 % d'allongement à -3 % de retrait, par rapport à la forme d'origine.

9. Procédé selon l'une quelconque des revendications 1 à 8, des polymères de silicone contenant de l'oxygène étant utilisés comme matériau polymère (i).

10. Procédé selon l'une quelconque des revendications 1 à 9, **caractérisé en ce que** le traitement thermique ultérieur a lieu en présence d'oxygène ou d'air.

11. Procédé selon l'une quelconque des revendications 1 à 10, **caractérisé en ce que** la quantité du composant réactif (iii), par rapport au mélange de départ précéramique, se situe dans la plage de 6 à 60 % en volume, en particulier de 10 à 50 % en volume.

12. Procédé selon l'une quelconque des revendications 1 à 11, **caractérisé en ce que** la température de pyrolyse au cours du traitement thermique ultérieur se situe dans une plage allant de 400 à 790°C, en particulier de 400 à 700°C.
